# EUROPÄISCHE PATENTANMELDUNG

(11) **EP 1 335 316 A2**
(43) Veröffentlichungstag der Anmeldung: **13.08.2003**
(21) Anmeldenummer: 03001905.3
(22) Anmeldetag: 30.01.2003
(51) Int. Cl.: G06K 7/10

(54) **Optoelektronische Vorrichtung**

(30) Priorität: 08.02.2002 DE 10205294
(71) Anmelder: Leuze electronic GmbH + Co., D-73277 Owen (DE)
(72) Erfinder: Claus, Armin, 72622 Nürtingen (DE); Dümmel, Thomas, 72584 Hülben (DE)
(74) Vertreter: Ruckh, Rainer Gerhard, Dr.

(57) **Zusammenfassung**

Die Erfindung betrifft eine optoelektronische Vorrichtung (1) zur Erkennung von mit Kontrastmustern versehenen Marken mit einem Sendelichtstrahlen (3) emittierenden Sender (4), einem Empfangslichtstrahlen (5) empfangenden Empfänger (6), einer Ablenkeinheit, mittels derer die Sendelichtstrahlen (3) periodisch innerhalb eines Überwachungsbereichs (10) geführt sind, und einer Auswerteeinheit zur Auswertung der am Ausgang des Empfängers (6) anstehenden Empfangssignale. Die von den Marken reflektierten Empfangslichtstrahlen (5) sind über die Ablenkeinheit auf den Empfänger (6) geführt, dessen lichtempfindliche Fläche (11) die Sendelichtstrahlen (3) zumindest teilweise umschließt.

## Beschreibung

Die Erfindung betrifft eine optoelektronische Vorrichtung gemäß dem Oberbegriff des Anspruchs 1.

Eine derartige optoelektronische Vorrichtung ist aus der DE 198 44 238 A1 bekannt. Diese optoelektronische Vorrichtung dient zur Erfassung von Marken, die insbesondere als Barcodes ausgebildet sind. Die optoelektronische Vorrichtung weist einen Sender mit einer nachgeordneten Sendeoptik und einen Empfänger mit einer vorgeordneten Empfangsoptik auf. Die vom Sender emittierten Sendelichtstrahlen und die von den Marken reflektierten Empfangslichtstrahlen werden über eine Ablenkeinheit geführt. Die Ablenkeinheit besteht aus einem rotierenden Polygonspiegelrad mit einer vorgegebenen Anzahl von Spiegelflächen. Mittels der Ablenkeinheit werden die Sendelichtstrahlen periodisch innerhalb eines Überwachungsbereichs geführt.

Um die Sendelichtstrahlen und Empfangslichtstrahlen jeweils über dieselbe Spiegelfläche des Polygonspiegelrads zu führen, sind zwischen dem Sender und der Ablenkeinheit einerseits und zwischen dem Empfänger und der Ablenkeinheit andererseits diverse Umlenkspiegel angeordnet, über welche die Sendelichtstrahlen und Empfangslichtstrahlen geführt werden.

Die optoelektronische Vorrichtung weist somit eine Vielzahl von optischen Komponenten auf, über welche die Sendelichtstrahlen und Empfangslichtstrahlen geführt werden müssen.

Die einzelnen Komponenten, insbesondere die Umlenkspiegel, müssen in geeigneter Weise justiert werden. Dadurch entsteht ein unerwünscht hoher Montageaufwand bei der Fertigung der optoelektronischen Vorrichtung. Zudem weist die optoelektronische Vorrichtung eine unerwünscht große Bauform auf, da insbesondere die Anordnung der Umlenkspiegel und der Empfangsoptik vor dem Empfänger einen großen Platzbedarf beansprucht.

Aus der WO 00/16 239 ist eine weitere gattungsgemäße optoelektronische Vorrichtung zur Erfassung von Barcodes bekannt. Bei dieser optoelektronischen Vorrichtung sind der Sender und der Empfänger übereinander liegend in Abstand zueinander angeordnet. Die vom Sender emittierten Sendelichtstrahlen und die von den Marken zurückreflektierten Empfangslichtstrahlen werden über eine Ablenkeinheit geführt. Die Ablenkeinheit ist von einem Polygonspiegelrad gebildet, welches eine vorgegebene Anzahl von Spiegelflächen aufweist. Die Sendelichtstrahlen und Empfangslichtstrahlen werden jeweils über dieselbe Spiegelfläche des Polygonspiegelrades geführt. Dabei sind die Sendelichtstrahlen und Empfangslichtstrahlen räumlich getrennt voneinander geführt, so dass die Sendelichtstrahlen auf das obere Teilsegment der jeweiligen Spiegelfläche des Polygonspiegelrads treffen, während die Empfangslichtstrahlen über das untere Teilsegment derselben Spiegelfläche geführt sind.

Um eine vollständige räumliche Trennung der Sendelichtstrahlen und Empfangslichtstrahlen zu erhalten, müssen die Teilsegmente der Spiegelfläche, auf welche die Sendelichtstrahlen und Empfangslichtstrahlen auftreffen, deutlich voneinander abgesetzt werden.

Bei dieser optoelektronischen Vorrichtung wird zwar eine gewisse Miniaturisierung dadurch erreicht, dass der Empfänger ohne eine vorgeordnete Empfangsoptik der Ablenkeinheit in Abstand gegenübersteht. Jedoch muss die Höhe des Polygonspiegelrads gegenüber herkömmlichen Polygonspiegelrädern deutlich vergrößert werden, um die gewünschte Separation der Sende- und Empfangslichtstrahlen zu erhalten. Dies wiederum bedingt eine unerwünschte Vergrößerung der Bauform der optoelektronischen Vorrichtung. Zudem ist hierbei nachteilig, dass die optischen Achsen des Senders und des Empfängers präzise zueinander und relativ zur Position der Ablenkeinheit ausgerichtet werden müssen, um die gewünschte räumliche Trennung der Sendelichtstrahlen und Empfangslichtstrahlen zu gewährleisten.

Der Erfindung liegt die Aufgabe zugrunde eine optoelektronische Vorrichtung der eingangs genannten Art so auszubilden, dass diese eine möglichst kleine Bauform aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung zur Erkennung von mit Kontrastmustern versehenen Marken weist einen Sendelichtstrahlen emittierenden Sender, einen Empfangslichtstrahlen empfangenden Empfänger, eine Ablenkeinheit, mittels derer die Sendelichtstrahlen periodisch innerhalb eines Überwachungsbereichs geführt sind, und eine Auswerteeinheit zur Auswertung der am Ausgang des Empfängers anstehenden Empfangssignale, auf. Die von den Marken reflektierten Empfangslichtstrahlen sind über die Ablenkeinheit auf den Empfänger geführt, dessen lichtempfindliche Fläche die Sendelichtstrahlen zumindest teilweise umschließt.

Ein wesentlicher Vorteil der Erfindung besteht darin, dass der Sender und der Empfänger der optoelektronischen Vorrichtung der Ablenkeinheit ohne Zwischenschaltung von Umlenkspiegeln gegenüberliegen. Durch die den Sender umschließende großflächige lichtempfindliche Fläche werden die von der Ablenkeinheit reflektierten Empfangslichtstrahlen ohne Vorschaltung einer Empfangsoptik nahezu vollständig auf den Empfänger geführt. Somit weist die erfindungsgemäße optoelektronische Vorrichtung nur eine geringe Anzahl von optischen Komponenten auf und kann mit einem geringen Montage- und Kostenaufwand gefertigt werden. Besonders vorteilhaft ist, dass durch die direkte Zuordnung des Senders und des Empfängers ohne eine Empfangsoptik und ohne Verwendung von Umlenkspiegeln eine äußerst kleine Bauform der optoelektronischen Vorrichtung erhalten wird.

Dieser Vorteil wird noch dadurch verstärkt, dass die lichtempfindliche Fläche des Empfängers die Sendelichtstrahlen zumindest teilweise umschließt. Dadurch wird eine koaxiale Strahlführung der Sendelichtstrahlen und Empfangslichtstrahlen erhalten.

Die Ablenkeinheit besteht vorzugsweise aus einem Polygonspiegelrad mit einer vorgegebenen Anzahl von Spiegelflächen, wobei die Sendelichtstrahlen und Empfangslichtstrahlen jeweils über dieselbe Spiegelfläche des Polygonspiegelrads geführt sind.

Durch die koaxiale Strahlführung der Sendelichtstrahlen und Empfangslichtstrahlen ist der auf die jeweilige Spiegelfläche abgebildete Sendelichtfleck der Sendelichtstrahlen von dem auf dieselbe Spiegelfläche abgebildeten Empfangslichtfleck der Empfangslichtstrahlen zumindest teilweise umschlossen. Dadurch wird die Spiegelfläche des Polygonspiegelrads effizient ausgenutzt, da diese von den Sendelichtstrahlen und Empfangslichtstrahlen nahezu vollständig ausgeleuchtet wird. Dies wiederum bedeutet, dass die Größen der Spiegelflächen optimal an den Querschnitt der Sende- und Empfangslichtflecke anpassbar sind, wodurch die Spiegelflächen und damit das gesamte Polygonspiegelrad eine kleine Baugröße aufweisen.

Der Empfänger ist vorzugsweise auf einem Träger angeordnet, die unmittelbar dem Sender nachgeordnet ist. Die lichtempfindliche Fläche des Empfängers und der Träger weisen jeweils eine Ausnehmung auf, wobei die Sendelichtstrahlen durch die Ausnehmungen geführt sind. Diese Anordnung des Senders und des Empfängers beansprucht nur ein geringes Bauvolumen und kann schnell und kostengünstig montiert werden, wobei der Justageaufwand hierfür besonders gering ist.

Zur optischen Trennung der Sendelichtstrahlen und Empfangslichtstrahlen und zur Vermeidung von Störlichteinstrahlungen in den Sender sind die Ausnehmungen des Trägers und des Empfängers von einer Hülse durchsetzt, deren vorderes Ende vorzugsweise über die Frontseite des Empfängers hervorsteht. In dieser Hülse sind die Sendelichtstrahlen geführt, deren Strahldurchmesser kleiner ist als der Innendurchmesser der Hülse.

Der Empfänger kann gemäß einer ersten Ausführungsform eine einstückige, zusammenhängende, lichtempfindliche Fläche aufweisen. Hierbei ist vorteilhaft, dass die lichtempfindliche Fläche eine homogene, lückenlose Fläche bildet, mittels derer eine hohe Nachweisempfindlichkeit für die auftreffenden Empfangslichtstrahlen erhalten wird.

Gemäß einer zweiten Ausführungsform besteht der Empfänger aus einer Anzahl von Empfangselementen mit lichtempfindlichen Teilflächen, welche zusammen die lichtempfindliche Fläche bilden. Hierbei ist vorteilhaft, dass als Empfangselemente konventionelle und kostengünstige PIN-Dioden-Elemente verwendet werden können.

Die Erfindung wird im nachstehenden anhand der Zeichnungen erläutert. Es zeigen:
- Figur 1:: Schematische Darstellung eines Ausführungsbeispiels der erfindungsgemäßen optoelektronischen Vorrichtung.
- Figur 2:: Detaildarstellung eines Ausschnitts der optoelektronischen Vorrichtung gemäß Figur 1.
- Figuren 3-7:: Unterschiedliche Ausführungsformen des Empfängers für die optoelektronische Vorrichtung gemäß Figur 1.

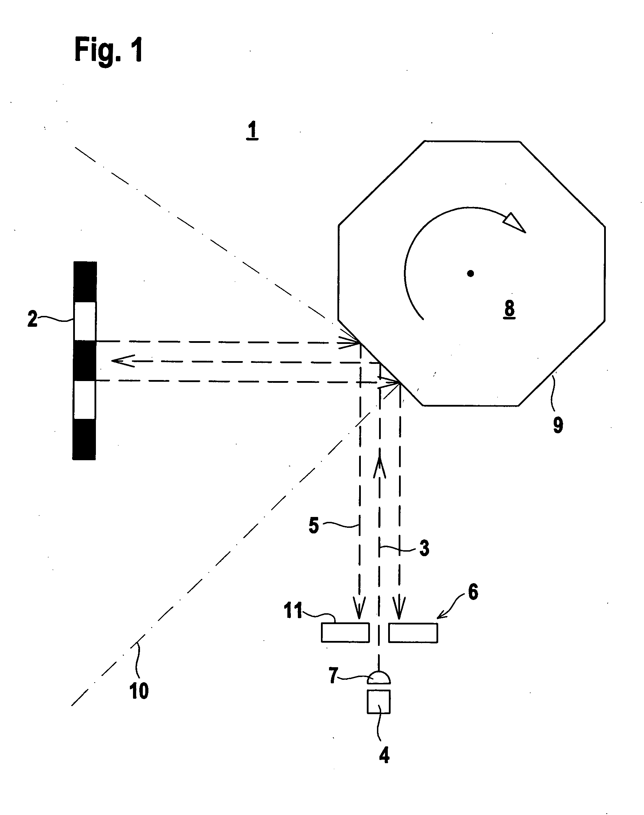

In Figur 1 ist schematisch der Aufbau einer optoelektronischen Vorrichtung 1 zum Erkennen von mit definierten Kontrastmustern versehenen Marken dargestellt. Prinzipiell können die Marken beliebige Folgen und Formen von aneinander angrenzenden Hell-Dunkelflächen, vorzugsweise Schwarz-Weiß-Flächen, aufweisen. Im Folgenden soll die Erfindung für den Fall erläutert werden, dass die Marken von Barcodes 2 gebildet sind. Die Barcodes 2 bestehen im Wesentlichen aus einer Folge von schwarzen und weißen Strichelementen definierter Länge und Breite.

Die optoelektronische Vorrichtung 1 weist einen Sendelichtstrahlen 3 emittierenden Sender 4 und einen Empfangslichtstrahlen 5 empfangenden Empfänger 6 auf. Dem Sender 4, der vorzugsweise von einer Laserdiode gebildet ist, ist eine Sendeoptik 7 zur Fokussierung der Sendelichtstrahlen 3 nachgeordnet.

Die vom Sender 4 emittierten Sendelichtstrahlen 3 und die von dem Barcode 2 zurückreflektierten Empfangslichtstrahlen 5 sind über eine Ablenkeinheit geführt. Die Ablenkeinheit besteht aus einem motorisch getriebenen Polygonspiegelrad 8 mit einer vorgegebenen Anzahl von facettenförmigen Spiegelflächen 9.

Durch die Drehbewegung des Polygonspiegelrades 8 werden die Sendelichtstrahlen 3 periodisch in einem Überwachungsbereich 10 geführt, der in einer Abtastebene verläuft. Der Überwachungsbereich 10 erstreckt sich über einen bestimmten Winkelbereich, der durch die Anzahl der Spiegelflächen 9 des Polygonspiegelrades 8 vorgegeben ist.

Die am Ausgang des Empfängers 6 anstehenden Empfangssignale werden in einem nicht dargestellten Verstärker verstärkt und in einer ebenfalls nicht dargestellten Auswerteeinheit ausgewertet.

Die Empfangslichtstrahlen 5, die an den Barcodes 2 reflektiert werden, weisen entsprechend der Folge von schwarzen und weißen Strichelementen des Barcodes 2 eine Amplitudenmodulation auf. Die am Ausgang des Empfängers 6 anstehenden Empfangssignale weisen eine entsprechende Amplitudenmodulation auf. Die analogen, amplitudenmodulierten Empfangssignale werden in der Auswerteeinheit mittels einer Schwellwerteinheit bewertet. Dadurch entstehen binäre Signalfolgen, anhand derer durch Vergleich mit abgespeicherten Kontrastmustern von Barcodes 2 die Erkennung des Barcodes 2 erfolgt.

Die vom Sender 4 emittierten Sendelichtstrahlen 3, die auf die Ablenkeinheit geführt sind und die von den Marken über die Ablenkeinheit zum Empfänger 6 zurückreflektierten Empfangslichtstrahlen 5 verlaufen koaxial.

Diese koaxiale Strahlführung wird dadurch erreicht, dass die lichtempfindliche Fläche 11 des Empfängers 6, der unmittelbar dem Sender 4 und der Sendeoptik 7 nachgeordnet ist, die Sendelichtstrahlen 3 zumindest teilweise umschließt.

Der Sender 4 und der Empfänger 6 liegen derart in Abstand zu dem Polygonspiegelrad 8, dass die Sendelichtstrahlen 3 und Empfangslichtstrahlen 5 über dieselbe Spiegelfläche 9 des Polygonspiegelrads 8 geführt sind. Die Spiegelflächen 9 des Polygonspiegelrades 8 sind im vorliegenden Fall senkrecht zu den Strahlachsen der Sendelichtstrahlen 3 und Empfangslichtstrahlen 5 orientiert. Der auf eine Spiegelfläche 9 abgebildete Empfangslichtfleck umschließt zumindest teilweise den auf dieselbe Spiegelfläche 9 abgebildeten Sendelichtfleck der Sendelichtstrahlen 3. Die Spiegelflächen 9 sind an die Geometrien der Sendelichtstrahlen 3 und Empfangslichtstrahlen 5 derart angepasst, dass diese die Spiegelfläche 9 möglichst vollständig ausleuchten.

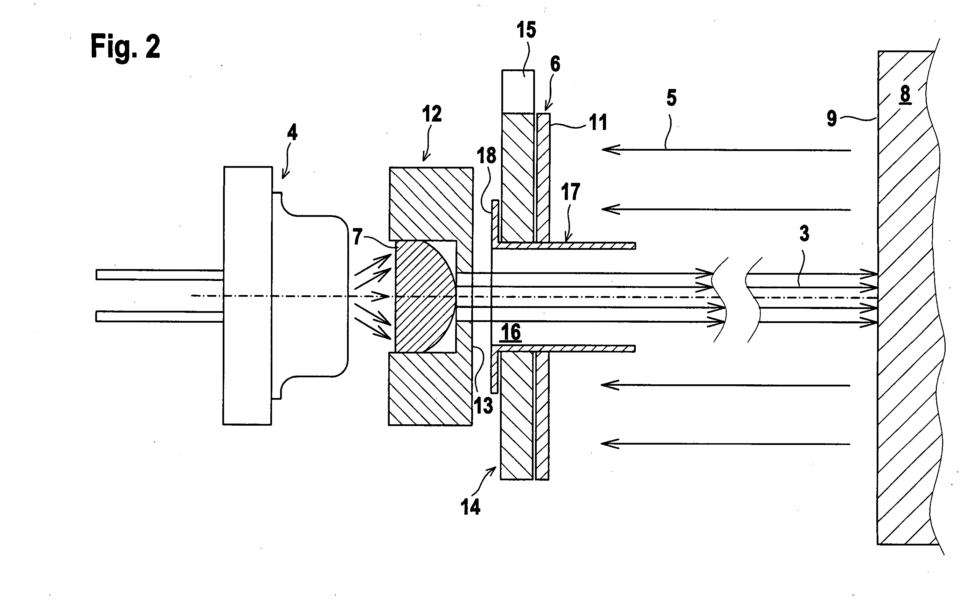

Figur 2 zeigt eine Detaildarstellung der optischen Komponenten der optoelektronischen Vorrichtung 1 gemäß Figur 1.

Die den Sender 4 bildende Laserdiode ist in einer nicht dargestellten Halterung fixiert. Dem Sender 4 ist ein Linsenhalter 12 nachgeordnet, in welchem die Sendeoptik 7 gelagert ist, die von einer Linse gebildet ist. Der Linsenhalter 12 besteht aus einem Kunststoffspritzteil oder dergleichen und weist an seiner Vorderseite eine Blende 13 auf, mit welcher der Strahldurchmesser der mit der Sendeoptik 7 fokussierten Sendelichtstrahlen 3 begrenzt wird. Der Sender 4, der Linsenhalter 12 und die Sendeoptik 7 bilden eine Sender-Baueinheit.

Dieser Sender-Baueinheit ist eine Empfänger-Baueinheit unmittelbar nachgeordnet. Die Empfänger-Baueinheit umfasst den Empfänger 6 sowie einen Träger 14, auf welcher der Empfänger 6 mit seiner Frontseite aufsitzt.

Der Träger 14 weist Anschlüsse 15 in Form von Stegen auf. Die Stege stehen von einem Rand des Trägers 14 hervor. Mit diesen'Stegen wird der Träger 14 auf eine nicht dargestellte Platine, auf welcher die Auswerteeinheit integriert ist, aufgesteckt und angelötet.

Der Träger 14 und der Empfänger 6 weisen jeweils eine Ausnehmung 16 auf. Bei dem Ausführungsbeispiel gemäß Figur 2 sind die Ausnehmungen 16 in Form von kongruenten, koaxial verlaufenden Bohrungen gebildet.

In diese Bohrungen ist eine lichtundurchlässige Hülse 17 eingesetzt, die Bestandteil der Empfänger-Baueinheit ist. Die Hülse 17 besteht aus einem lichtundurchlässigen Kunststoffspritzteil. Die Hülse 17 weist eine hohlzylindrische Form auf, wobei an deren hinterem Ende ein von der äußeren Mantelfläche hervorstehender ringförmiger Absatz 18 vorgesehen ist. Die Hülse 17 ist durch die Bohrungen des Trägers 14 und des Empfängers 6 geführt und steht mit ihrem vorderen Rand geringfügig über die von der lichtempfindliche Fläche 11 gebildeten Frontseite des Empfängers 6 hervor.

Die Hülse 17 wird von der Rückseite des Trägers 14 in die Bohrungen des Trägers 14 und des Empfängers 6 gesetzt, bis der Absatz 18 an der Rückwand des Trägers 14 anliegt, so dass die Hülse 17 lagestabilisiert ist.

Die Längsachse der Hülse 17 verläuft koaxial zu den optischen Achsen des Senders 4 und der Sendeoptik 7. Die Sendelichtstrahlen 3 verlaufen im Innern der Hülse 17, wobei der Strahldurchmesser der Sendelichtstrahlen 3 geringer ist als der Innendurchmesser der Hülse 17.

Mit der Hülse 17 wird eine optische Entkopplung der Sendelichtstrahlen 3 und der von der Ablenkeinheit auf den Empfänger 6 geführten Empfangslichtstrahlen 5 erreicht.

Die lichtempfindliche Fläche 11 des Empfängers 6 steht der Ablenkeinheit ohne Zwischenschaltung einer Empfangsoptik gegenüber, wobei die lichtempfindliche Fläche 11 des Empfängers 6 ebenso wie die Spiegelflächen 9 des Polygonspiegelrades 8 in einer vertikalen, senkrecht zu den Strahlachsen der Sendelichtstrahlen 3 und Empfangslichtstrahlen 5 verlaufenden Ebene orientiert ist.

Zur Erhöhung der Nachweisempfindlichkeit ist die lichtempfindliche Fläche 11 des Empfängers 6 möglichst groß gewählt und bevorzugt an die Größen der Spiegelflächen 9 angepasst. Die lichtempfindliche Fläche 11 umschließt dabei bei dem in Figur 2 dargestellten Fall die Bohrung des Empfängers 6 vollständig, wobei die Fläche der Bohrung erheblich kleiner ist als die lichtempfindliche Fläche 11. Dadurch wird eine hohe Nachweisempfindlichkeit des Empfängers 6 erhalten. Wie aus Figur 2 ersichtlich leuchten die koaxial zu den Sendelichtstrahlen 3 verlaufenden Empfangslichtstrahlen 5 die lichtempfindliche Fläche 11 nahezu vollständig aus.

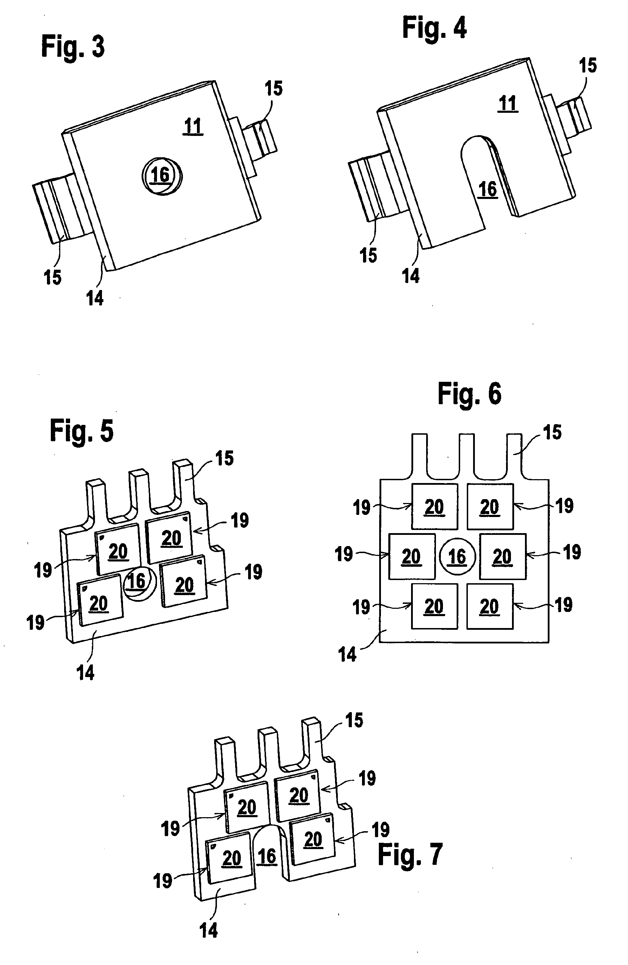

Die Figuren 3 - 7 zeigen unterschiedlich ausgebildete Empfänger 6 für die optoelektronische Vorrichtung 1 gemäß den Figuren 1 und 2.

Figur 3 zeigt einen Empfänger 6, der auf einem quadratischen Träger 14 aufsitzt, von welcher seitlich zwei Anschlüsse 15 zur Fixierung an einer Platine hervorstehen. Der Empfänger 6 ist an die Größe des Trägers 14 angepasst, so dass dessen lichtempfindliche Fläche 11 sich über die gesamte Oberfläche des Trägers 14 erstreckt. Die homogene, einstückig ausgebildete lichtempfindliche Fläche 11 weist eine quadratische Außenkontur auf. Ebenso wie der Träger 14 weist der Empfänger 6 eine kreisförmige, zentrale Bohrung auf, welche die Ausnehmung 16 bildet, durch welche die Sendelichtstrahlen 3 geführt sind. Da sich die lichtempfindliche Fläche 11 lückenlos über die gesamte Trägerfläche erstreckt, wird ein großer Teil der Empfangslichtstrahlen 5 von der Ablenkeinheit auf den Empfänger 6 geführt, wodurch eine hohe Nachweisempfindlichkeit des Empfängers 6 erhalten wird. Der Empfänger 6 besteht bevorzugt aus einem großflächigen PIN-Dioden-Element.

Figur 4 zeigt eine Abwandlung des Ausführungsbeispiels gemäß Figur 3. Der Empfänger 6 weist wiederum eine homogene, einstückige lichtempfindliche Fläche 11 auf, die sich über die gesamte Fläche des quadratischen Trägers 14 erstreckt. Im Unterschied zu dem Ausführungsbeispiel gemäß Figur 3 sind die Ausnehmungen 16 in dem Träger 14 und dem Empfänger 6 nicht als Bohrungen ausgebildet. Vielmehr verlaufen die Ausnehmungen 16 vom Zentrum des Trägers 14 beziehungsweise des Empfängers 6 zu deren Rändern und münden dort aus. Somit umschließt die lichtempfindliche Fläche 11 die durch die Ausnehmung 16 geführten Sendelichtstrahlen 3 nicht mehr vollständig, sondern nur noch teilweise.

Die Figuren 5 - 7 zeigen Ausführungsformen eines mehrstückige ausgebildeten Empfängers 6. Der Empfänger 6 besteht aus einer vorgegebenen Anzahl einzelner Empfangselemente 19, die vorzugsweise identisch ausgebildet sind und von herkömmlichen PIN-Dioden-Elementen gebildet sind. Die einzelnen Empfangselemente 19 weisen lichtempfindliche Teilflächen 20 auf, die sich zu einer gemeinsamen lichtempfindlichen Fläche 11 ergänzen. Hierzu wird in der Auswerteeinheit die Summe der Ausgangssignale der einzelnen Empfangselemente 19 gebildet, welche das Empfangssignal des gesamten Empfängers 6 bildet. Durch diese Zusammenschaltung der einzelnen Empfangselemente 19 des Empfängers 6 wird die erforderliche Nachweisempfindlichkeit bei dem Empfang der Empfangslichtstrahlen 5 erhalten.

Wie aus den Figuren 5 - 7 ersichtlich weist der Träger 14 jeweils einen im Wesentlichen quadratischen Querschnitt auf, wobei dieser von einer Leiterplatte gebildet ist. Von den oberen Rändern des Trägers 14 stehen jeweils drei parallel verlaufende Stege hervor, welche die Anschlüsse 15 zum Anschluss an die Platine bilden.

Figur 5 zeigt einen Empfänger 6 mit vier Empfangselementen 19, die identisch ausgebildete quadratische lichtempfindliche Teilflächen 20 aufweisen. Der Träger 14 weist eine zentrale kreisförmige Bohrung auf, welche die Ausnehmung 16 bildet, durch welche die Sendelichtstrahlen 3 geführt sind. Die Empfangselemente 19 sind U-förmig um die Bohrung angeordnet, so dass deren lichtempfindliche Teilflächen 20 die Sendelichtstrahlen 3, die die Bohrung durchsetzen, teilweise umschließen.

Figur 6 zeigt eine erste Abwandlung des Ausführungsbeispiels gemäß Figur 5. Der Träger 14 weist analog zum Ausführungsbeispiel gemäß Figur 5 eine zentrale, kreisförmige Bohrung auf, durch welche die Sendelichtstrahlen 3 geführt sind. Im Unterschied zum Ausführungsbeispiel gemäß Figur 5 weist der Empfänger 6 im vorliegenden Fall sechs identisch ausgebildete Empfangselemente 19 auf.

Diese Empfangselemente 19 schließen an den Rand der Bohrung an und sind im Wesentlichen rotationssymmetrisch zur Bohrung angeordnet, so dass die lichtempfindlichen Teilflächen 20 eine ringförmige Anordnung bilden, welche die durch die Bohrung geführten Sendelichtstrahlen 3 vollständig umschließen.

Figur 7 zeigt eine zweite Abwandlung des Ausführungsbeispiels gemäß Figur 5. Der quadratische Träger 14 weist im vorliegenden Fall eine Ausnehmung 16 auf, welche vom Zentrum des Trägers 14 zu deren unteren Rand hin verläuft und dort ausmündet. Die Sendelichtstrahlen 3 durchsetzen die Ausnehmung 16 im Bereich des Zentrums des Trägers 14. Der Empfänger 6 weist im vorliegenden Fall vier identisch ausgebildete Empfangselemente 19 mit quadratischen lichtempfindlichen Teilflächen 20 auf. Die Empfangselemente 19 grenzen an den Rand der Ausnehmung 16 an und bilden dabei eine U-förmige Anordnung.

Wie aus den Ausführungsbeispielen gemäß den Figuren 5 - 7 ersichtlich, sind die Anzahl der Empfangselemente 19 sowie deren Anordnungen auf dem Träger 14 so gewählt, dass deren lichtempfindliche Teilflächen 20 einen möglichst großen Teil der Oberfläche des Trägers 14 bedecken, um eine entsprechend hohe Nachweisempfindlichkeit des Empfängers 6 zu erhalten.

### Bezugszeichenliste

- (1): Optoelektronische Vorrichtung
- (2): Barcodes
- (3): Sendelichtstrahlen
- (4): Sender
- (5): Empfangslichtstrahlen
- (6): Empfänger
- (7): Sendeoptik
- (8): Polygonspiegelrad
- (9): Spiegelflächen
- (10): Überwachungsbereich
- (11): Lichtempfindliche Fläche
- (12): Linsenhalter
- (13): Blende
- (14): Träger
- (15): Anschlüsse
- (16): Ausnehmung
- (17): Hülse
- (18): Absatz
- (19): Empfangselemente
- (20): Lichtempfindliche Teilflächen

## Patentansprüche

1. Optoelektronische Vorrichtung zur Erkennung von mit Kontrastmustern versehenen Marken mit einem Sendelichtstrahlen emittierenden Sender, einem Empfangslichtstrahlen empfangenden Empfänger, einer Ablenkeinheit, mittels derer die Sendelichtstrahlen periodisch innerhalb eines Überwachungsbereichs geführt sind, und einer Auswerteeinheit zur Auswertung der am Ausgang des Empfängers anstehenden Empfangssignale, **dadurch gekennzeichnet, dass** die von den Marken reflektierten Empfangslichtstrahlen (5) über die Ablenkeinheit auf den Empfänger (6) geführt sind, dessen lichtempfindliche Fläche (11) die Sendelichtstrahlen (3) zumindest teilweise umschließt.

2. Optoelektronische Vorrichtung nach Anspruch 1, **dadurch gekennzeichnet, dass** der Empfänger (6) an die Frontseite des Senders (4) anschließt, wobei die lichtempfindliche Fläche (11) des Empfängers (6) eine Ausnehmung (16) aufweist, durch welche die Sendelichtstrahlen (3) geführt sind.

3. Optoelektronische Vorrichtung nach Anspruch 2, **dadurch gekennzeichnet, dass** die lichtempfindliche Fläche (11) des Empfängers (6) eine bezüglich der Ausnehmung (16) rotationssymmetrische Anordnung bildet.

4. Optoelektronische Vorrichtung nach einem der Ansprüche 2 oder 3, **dadurch gekennzeichnet, dass** die Ausnehmung (16) als zentrale Bohrung in der lichtempfindlichen Fläche (11) des Empfängers (6) ausgebildet ist.

5. Optoelektronische Vorrichtung nach Anspruch 2, **dadurch gekennzeichnet, dass** die Ausnehmung (16) an einem Rand des Empfängers (6) ausmündet.

6. Optoelektronische Vorrichtung nach Anspruch 5, **dadurch gekennzeichnet, dass** die an die Ausnehmung (16) anschließende lichtempfindliche Fläche (11) des Empfängers (6) eine U-förmige Anordnung bildet.

7. Optoelektronische Vorrichtung nach einem der Ansprüche 1 - 6, **dadurch gekennzeichnet, dass** der Empfänger (6) eine einstückige, lichtempfindliche Fläche (11) aufweist.

8. Optoelektronische Vorrichtung nach einem der Ansprüche 1 - 7, **dadurch gekennzeichnet, dass** der Empfänger (6) aus einer vorgegebenen Anzahl von Empfangselementen (19) besteht, deren lichtempfindlichen Teilflächen (20) Bestandteile der lichtempfindlichen Fläche (11) sind.

9. Optoelektronische Vorrichtung nach Anspruch 8, **dadurch gekennzeichnet, dass** die Empfangselemente (19) die Ausnehmung (16) des Empfängers (6) begrenzen.

10. Optoelektronische Vorrichtung nach einem der Ansprüche 8 oder 9, **dadurch gekennzeichnet, dass** das Empfangssignal des Empfängers (6) von dem Summensignal der Ausgangssignale der Empfangselemente (19) gebildet ist.

11. Optoelektronische Vorrichtung nach einem der Ansprüche 7 - 10, **dadurch gekennzeichnet, dass** die Empfangselemente (19) von PIN-Dioden-Elementen gebildet sind.

12. Optoelektronische Vorrichtung nach einem der Ansprüche 7 - 11, **dadurch gekennzeichnet, dass** die Empfangselemente (19) des Empfängers (6) auf einem Träger (14) angeordnet sind, welche eine der Ausnehmung (16) des Empfängers (6) entsprechende Ausnehmung (16) aufweist.

13. Optoelektronische Vorrichtung nach Anspruch 12, **dadurch gekennzeichnet, dass** der Träger (14) Anschlüsse (15) zum Anschluss an eine Platine aufweist, auf welcher die Auswerteeinheit integriert ist.

14. Optoelektronische Vorrichtung nach Anspruch 13, **dadurch gekennzeichnet, dass** die Anschlüsse (15) in Form von Stegen ausgebildet sind, welche von einem Rand des Trägers (14) hervorstehen.

15. Optoelektronische Vorrichtung nach einem der Ansprüche 12 - 14, **dadurch gekennzeichnet, dass** die Ausnehmungen (16) des Trägers (14) und des Empfängers (6) von einer lichtundurchlässigen Hülse (17) durchsetzt sind, in welcher die Sendelichtstrahlen (3) geführt sind.

16. Optoelektronische Vorrichtung nach Anspruch 15, **dadurch gekennzeichnet, dass** der Strahldurchmesser der Sendelichtstrahlen (3) kleiner ist als der Innendurchmesser der Hülse (17).

17. Optoelektronische Vorrichtung nach einem der Ansprüche 15 oder 16, **dadurch gekennzeichnet, dass** die Hülse (17) über die von der lichtempfindlichen Fläche (11) gebildete Frontseite des Empfängers (6) hervorsteht.

18. Optoelektronische Vorrichtung nach einem der Ansprüche 15 - 17, **dadurch gekennzeichnet, dass** der Träger (14), der Empfänger (6) und die Hülse (17) eine Empfänger-Baueinheit bilden.

19. Optoelektronische Vorrichtung nach einem der Ansprüche 1 - 18, **dadurch gekennzeichnet, dass** dem Sender (4) eine Sendeoptik (7) zur Fokussierung der Sendelichtstrahlen (3) nachgeordnet ist.

20. Optoelektronische Vorrichtung nach Anspruch 19, **dadurch gekennzeichnet, dass** die Sendeoptik (7) in einem Linsenhalter (12) gelagert ist.

21. Optoelektronische Vorrichtung nach Anspruch 20, **dadurch gekennzeichnet, dass** der Sender (4), die Sendeoptik (7) und der Linsenhalter (12) eine Sender-Baueinheit bilden, welche der Empfänger-Baueinheit vorgeordnet ist.

22. Optoelektronische Vorrichtung nach einem der Ansprüche 1 - 21, **dadurch gekennzeichnet, dass** die Ablenkeinheit von einem Polygonspiegelrad (8) mit einer vorgegebenen Anzahl von Spiegelflächen (9) gebildet ist, wobei der auf eine Spiegelfläche (9) abgebildete Empfangslichtfleck der Empfangslichtstrahlen (5) den auf dieselbe Spiegelfläche (9) abgebildeten Sendelichtfleck der Sendelichtstrahlen (3) zumindest teilweise umschließt.
